# EUROPEAN PATENT APPLICATION

(11) **EP 4 486 006 A1**
(43) Date of publication of application: **01.01.2025**
(21) Application number: 22928812.1
(22) Date of filing: 01.08.2022
(51) Int. Cl.: H04W 36/08, H04W 4/70

(54) **COMMUNICATION SYSTEM AND COMMUNICATION TERMINAL**

(30) Priority: 22.02.2022 US 202263312391 P
(71) Applicant: Kabushiki Kaisha Yaskawa Denki, Kitakyushu-shi, Fukuoka 806-0004 (JP)
(72) Inventor: KOBAYASHI Kazutoshi, Kitakyushu-shi, Fukuoka 806-0004 (JP); FUJINO Kazuo, Kitakyushu-shi, Fukuoka 806-0004 (JP); MINAMIDA Yuki, Kitakyushu-shi, Fukuoka 806-0004 (JP); MORIWAKA Ryota, Kitakyushu-shi, Fukuoka 806-0004 (JP); YUBA Tadasuke, Kitakyushu-shi, Fukuoka 806-0004 (JP); SHIMODOME Ryo, Kitakyushu-shi, Fukuoka 806-0004 (JP); MATAKA Mikio, Kitakyushu-shi, Fukuoka 806-0004 (JP)
(74) Representative: Viering, Jentschura & Partner mbB Patent- und Rechtsanwälte
(86) International application number: PCT/JP2022/029546
(87) International publication number: WO 2023/162291

(57) **Abstract**

A communication system 10 includes: a host system 11 including a client device 20 and a server device 100 that performs inter-device communication with the client device 20; and a communication terminal 400 connected to the client device 20 and performing mobile wireless communication for inter-device communication with a base station 200 connected to the server device 100, wherein the communication terminal 400 notifies the host system 11 of information of the base station 200.

## Description

### Technical Field

The present disclosure relates to a communication system and a communication terminal.

### Background Art

Patent Document 1 discloses a system including a robot, a machining device, a robot controller that controls the robot, a machining device controller that controls the machining device, and a programmable logic controller that generates commands for the robot controller and the machining device controller.

### Citation List

### Patent Literature

[Patent Document 1] Japanese Unexamined Patent Publication No. 2019-209454

### Summary of Invention

### Technical Problem

The present disclosure provides a communication system effective for improving reliability of inter-device communication by mobile wireless communication.

### Solution to Problem

A communication system according to an aspect of the present disclosure includes: a host system including a client device and a server device configured to perform inter-device communication with the client device; and a communication terminal connected to the client device and configured to perform mobile wireless communication for inter-device communication with a base station connected to the server device, wherein the communication terminal is configured to notify the host system of information of the base station.

A communication terminal according to another aspect of the present disclosure is a communication terminal that is connected to a client device of a host system including the client device and a server device that are configured to perform inter-device communication with each other, the communication terminal being configured to perform mobile wireless communication for the inter-device communication with a base station connected to the server device, the communication terminal including: a base station information acquisition unit configured to acquire information of the base station; and a notification unit configured to notify a system of information of the base station.

### Advantageous Effects of Invention

According to the present disclosure, it is possible to provide a communication system effective for improving reliability of inter-device communication by mobile wireless communication.

### Brief Description of Drawings

FIG. 1 is a schematic diagram illustrating an example configuration of a machine system.
FIG. 2 is a schematic diagram illustrating an example configuration of a robot.
FIG. 3 is a schematic diagram illustrating an example system in which a server device changes a control mode based on information of a base station notified from a communication terminal.
FIG. 4 is a block diagram illustrating an example functional configuration of a communication terminal and a local controller.
FIG. 5 is a block diagram illustrating an example functional configuration of the base station and the server device.
FIG. 6 is a block diagram illustrating an example functional configuration of a controller in the server device.
FIG. 7 is a block diagram illustrating an example hardware configuration of the server device and the base station.
FIG. 8 is a block diagram illustrating an example hardware configuration of the communication terminal and the local controller.
FIG. 9 is a flowchart illustrating an example connection procedure between the communication terminal and the base station.
FIG. 10 is a flowchart illustrating an example control procedure of the communication terminal by a host system.
FIG. 11 is a flowchart illustrating an example procedure for changing the control mode based on information of the base station.
FIG. 12 is a flowchart illustrating an example procedure for changing the control mode based on a sign of handover.
FIG. 13 is a flowchart illustrating an example control procedure in a server control mode.
FIG. 14 is a flowchart illustrating an example control procedure in an autonomous control mode.

### Description of Embodiments

Hereinafter, an embodiment will be described in detail with reference to the drawings. In the description, the same elements or elements having the same functions are denoted by the same symbols, and redundant description will be omitted.

### Machine System

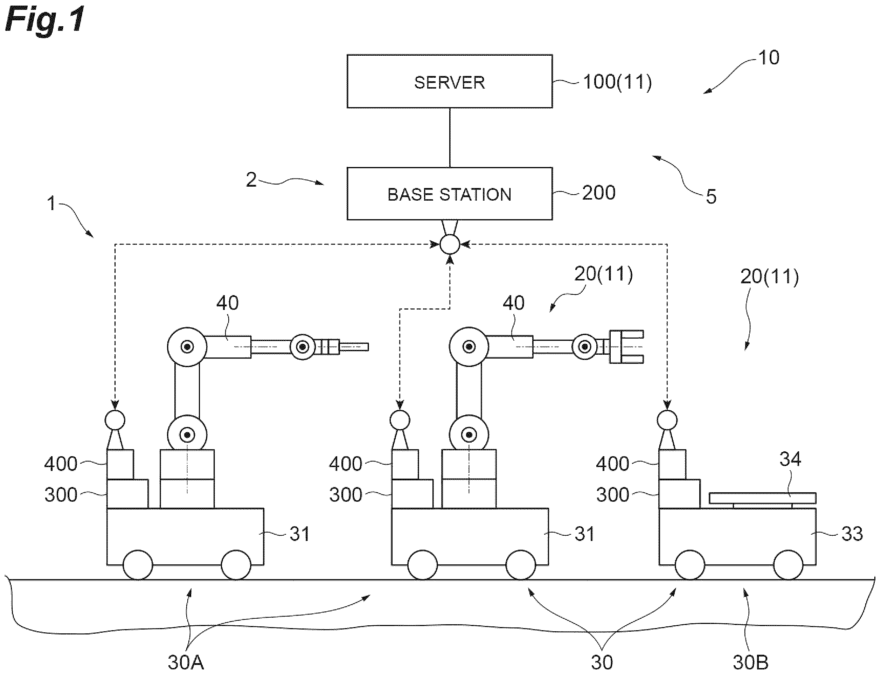

FIG. 1 is a schematic view illustrating a machine system. A machine system 1 illustrated in FIG. 1 includes a server device 100 and a plurality of machines 20. Each of the plurality of machines 20 performs motions. Although three machines 20 are illustrated in FIG. 1, the number of the machines 20 is not limited to this.

Each of the plurality of machines 20 includes a body 30 and a local controller 300. The body 30 is a machine that is controlled by the local controller 300 and performs multiple types of motion. The type of the body 30 is not particularly limited.

As an example, two types of bodies 30A, 30B are illustrated in FIG. 1. The body 30A is a mobile robot, and performs motions for conveying, processing, assembling, and the like on a workpiece. Specific examples of the motions include a motion for conveying a component and attaching the component to a workpiece, a motion for conveying a tool such as a screw tightening tool or a welding torch and processing the workpiece, and a motion for conveying the workpiece itself.

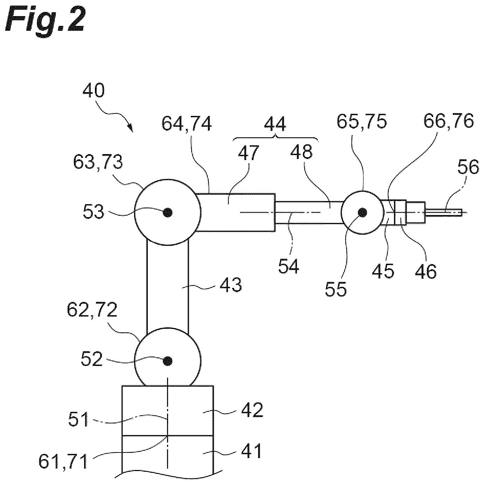

The body 30 includes an automated guided vehicle 31 and a robot 40. The automated guided vehicle 31 supports and moves the robot 40. The robot 40 is, for example, a vertical articulated industrial robot. As illustrated in FIG. 2, the robot 40 includes a base 41, a pivoting portion 42, a first arm 43, a second arm 44, a wrist portion 45, and a tip portion 46. The base 41 is placed on top of the automated guided vehicle 31. The pivoting portion 42 is mounted on the base 41 so as to be rotatable about a vertical axis 51. For example, the robot 40 includes a joint 61 that attaches the pivoting portion 42 to the base 41 so as to be rotatable about the axis 51. The first arm 43 is connected to the pivoting portion 42 so as to be rotatable about an axis 52 intersecting (for example, orthogonal to) the axis 51. For example, the robot 40 includes a joint 62 that connects the first arm 43 to the pivoting portion 42 so as to be rotatable about the axis 52. Intersecting includes being skewed, such as so-called grade separation. The same applies to the following. The first arm 43 extends from the pivoting portion 42 along a direction that intersects (for example, is orthogonal to) the axis 52.

The second arm 44 is connected to the end of the first arm 43 so as to be rotatable about an axis 53 parallel to the axis 52. For example, the robot 40 includes a joint 63 that connects the second arm 44 to the first arm 43 so as to be rotatable about the axis 53. The second arm 44 includes an arm base 47 that extends from the end of the first arm 43 along one direction that intersects (for example, is orthogonal to) the axis 53, and an arm end 48 that further extends from the end of the arm base 47 along the same one direction. The arm end 48 is rotatable about an axis 54 relative to the arm base 47. The axis 54 intersects (for example, is orthogonal to) the axis 53. For example, the robot 40 includes a joint 64 that connects the arm end 48 to the arm base 47 so as to be rotatable about the axis 54.

The wrist portion 45 is connected to the arm end 48 so as to be rotatable about an axis 55 that intersects (for example, is orthogonal to) the axis 54. For example, the robot 40 includes a joint 65 that connects the wrist portion 45 to the arm end 48 so as to be rotatable about the axis 55. The wrist portion 45 extends from the end of the arm end 48 along one direction that intersects (for example, is orthogonal to) the axis 55. The tip portion 46 is connected to the end of the wrist portion 45 so as to be rotatable about an axis 56 that intersects (for example, is orthogonal to) the axis 55. For example, the robot 40 includes a joint 66 that connects the tip portion 46 to the wrist portion 45 so as to be rotatable about the axis 56. An end effector is provided on the tip portion 46. Specific examples of the end effector include a hand that grips a workpiece, and a work tool that performs processing, assembly, or the like on a workpiece.

Actuators 71, 72, 73, 74, 75, 76 drive the joints 61, 62, 63, 64, 65, 66. Each of the actuators 71, 72, 73, 74, 75, 76 includes, for example, an electric motor and a transmission unit (for example, a reduction gear) that transmits the power of the electric motor to the joints 61, 62, 63, 64, 65, 66. For example, the actuator 71 drives the joint 61 so as to rotate the pivoting portion 42 about the axis 51. The actuator 72 drives the joint 62 so as to rotate the first arm 43 about the axis 52. The actuator 73 drives the joint 63 so as to rotate the second arm 44 about the axis 53. The actuator 74 drives the joint 64 so as to rotate the arm end 48 about the axis 54. The actuator 75 drives the joint 65 so as to rotate the wrist portion 45 about the axis 55. The actuator 76 drives the joint 66 so as to rotate the tip portion 46 about the axis 56.

The body 30 is not necessarily limited to the above-described mobile robot, and may be a robot fixed at a fixed position. The body 30 may be an automated guided vehicle that performs a motion for conveying a conveyance object such as a workpiece.

The body 30B is an automated guided vehicle that conveys a conveyance object such as a workpiece. The body 30B includes an automated guided vehicle 33 and a loading table 34. The automated guided vehicle 33 supports and moves the loading table 34. The loading table 34 supports the conveyance object.

The server device 100 performs inter-device communication with the local controller 300 of the plurality of machines 20, and causes the bodies 30 of the plurality of machines 20 to perform a series of motions for production of a workpiece or the like. For the inter-device communication, the machine system 1 includes a communication system 10.

The communication system 10 includes a host system 11 and a communication terminal 400. The host system 11 includes the machine 20 that is an example of a client device, and the server device 100 that performs inter-device communication with the client device.

The inter-device communication is communication performed between devices to control motion, for example, as described above. Such inter-device communication may include transmission and reception of control commands, transmission and reception of feedback information during control, transmission and reception of operation completion notifications in response to a control command, and the like.

The communication terminal 400 is connected to the local controller 300 and performs mobile wireless communication for inter-device communication with a base station 200 connected to the server device 100. Examples of the mobile wireless communication include, but are not necessarily limited to, communication using a fifth-generation mobile communication system (5G communication). For example, the communication terminal 400 is fixed to the body 30 and moves together with the body 30. Accordingly, the communication terminal 400 can be moved by the local controller 300.

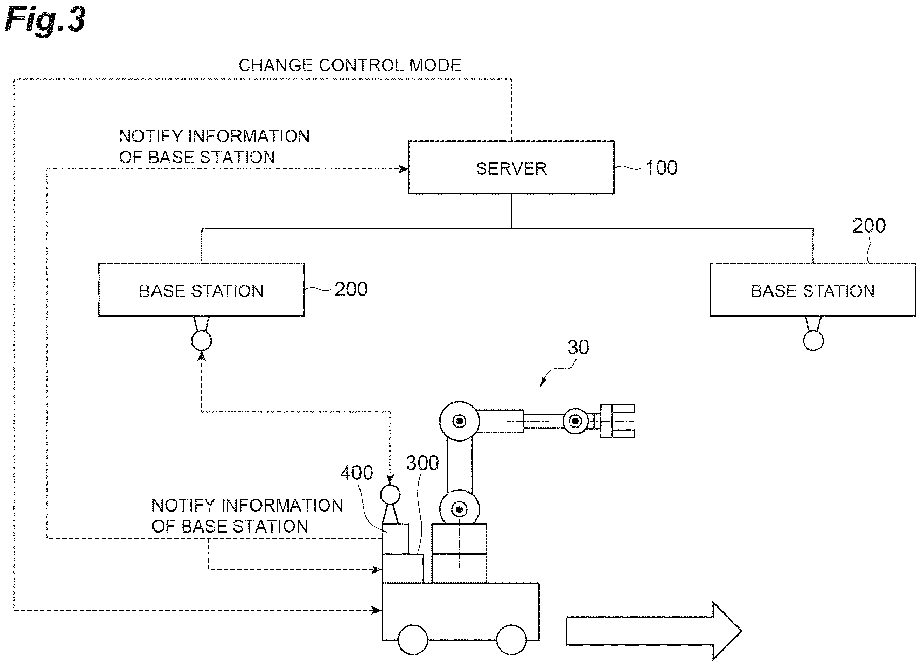

As illustrated in FIG. 3, a plurality of base stations 200 may be connected to the server device 100. In a system in which a plurality of base stations 200 may be connected to the server device 100, a connection state between the communication terminal 400 and the plurality of base stations 200 may have an influence on reliability of inter-device communication. For example, there is a possibility that mobile wireless communication satisfying a requirement for the inter-device communication cannot be performed depending on specifications of the base station 200 to which the communication terminal 400 is connected because the specifications of the plurality of base stations 200 are different from each other. For example, in the base station 200 whose communication speed is low, there is a possibility that inter-device communication cannot be performed at a sufficiently high speed. Even in a base station 200 whose communication speed according to the specifications is sufficient, there is a possibility that inter-device communication cannot be performed at a sufficient speed because the base station 200 is shared by many terminals. In the base station 200 whose radio field strength is weak, there is a possibility that the reliability of communication required for inter-device communication cannot be secured. In addition, there is a possibility that it is difficult to continue inter-device communication at a necessary communication cycle due to handover occurring between the plurality of base stations 200.

Thus, the communication terminal 400 is configured to notify the host system 11 of information of the base station 200. Accordingly, in the host system 11, it is possible to cope with the above-described influence based on the information of the base station 200. Examples of coping with the above-described influence include changing the control mode of the body 30 by the server device 100, as illustrated in FIG. 3.

As an example of notifying the host system 11 of the information of the base station 200, the communication terminal 400 may notify the local controller 300 of the information of the base station 200, may notify the server device 100 of the information of the base station 200, or may notify both the local controller 300 and the server device 100 of the information of the base station 200. Notifying the server device 100 of the information of the base station 200 includes notifying the local controller 300 of the information of the base station 200 and causing the local controller 300 to transmit the information of the base station 200 to the server device 100.

The information of the base station 200 may include both information of the base station 200 that is connected and information of the base station 200 that is not connected. The information of the base station 200 includes, for example, identification information of the base station 200. The identification information of the base station 200 may be, for example, information that can identify the individual base station 200 or information that can identify attributes of the base station 200. Examples of the information that can identify the attributes of the base station 200 include information indicating the type of the base station 200 and information indicating the specifications of the base station 200.

The information of the base station 200 may include information of a communication state between the local controller 300 and the communication terminal 400. Examples of the information of the communication state include information on radio waves received from the base station 200 (for example, information on the strength of radio waves), information indicating a sign of handover from a connected base station 200 to another base station 200, and the like.

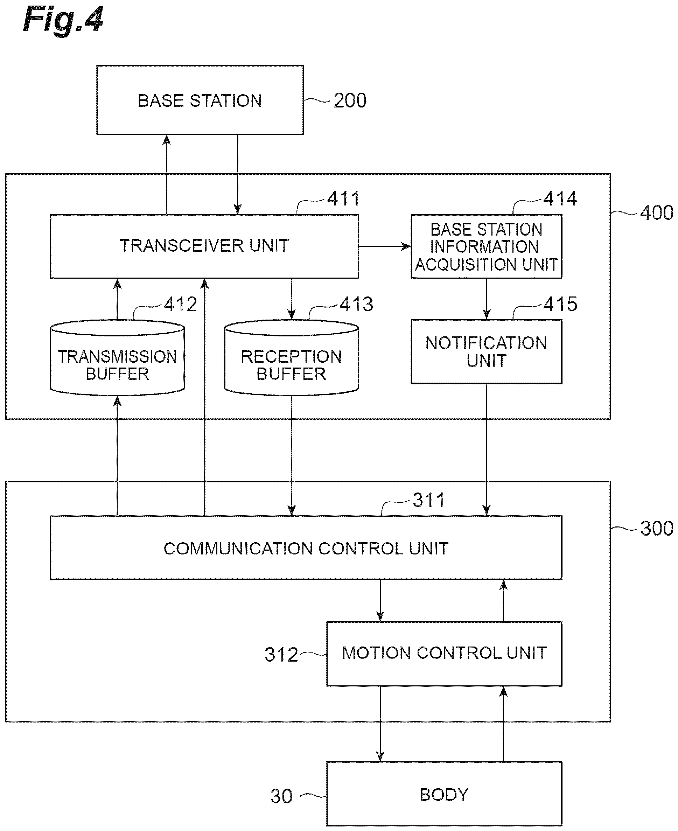

FIG. 4 is a block diagram illustrating a functional configuration of the communication terminal 400 and the local controller 300. As illustrated in FIG. 4, the communication terminal 400 includes a transceiver unit 411, a transmission buffer 412, a reception buffer 413, a base station information acquisition unit 414, and a notification unit 415 as functional constituent elements (hereinafter referred to as "functional blocks"). The transceiver unit 411 performs mobile wireless communication with the base station 200. The transmission buffer 412 temporarily stores information that the transceiver unit 411 transmits to the base station 200 through mobile wireless communication. The reception buffer 413 temporarily stores information received by the transceiver unit 411 from the base station 200 through mobile wireless communication. The base station information acquisition unit 414 acquires the information of the base station 200 from the information that the transceiver unit 411 received from the base station 200. The notification unit 415 notifies the local controller 300 of the information of the base station 200.

As illustrated in FIG. 4, the local controller 300 includes a communication control unit 311 and a motion control unit 312 as functional blocks. The communication control unit 311 performs inter-device communication with the server device 100. For example, the communication control unit 311 stores, in the transmission buffer 412, information to be transmitted from the communication terminal 400 to the base station 200, and reads, from the reception buffer 413, information that the communication terminal 400 receives from the base station 200.

The motion control unit 312 controls the body 30 based on the control command received by the communication control unit 311 from the server device 100. The motion control unit 312 may be configured to autonomously perform at least a part of the control of the body 30 without being based on the control command from the server device 100. In this case, the local controller 300 controls the body 30 based on, for example, an operation program stored therein. The operation program includes a plurality of operation commands arranged in time series. Each of the plurality of operation commands includes an operation target position and an operation target speed of the body 30. Examples of the operation target position of the body 30 include an operation target position of the tip portion 46. The operation target position of the tip portion 46 includes an operation target posture of the tip portion 46.

The communication control unit 311 receives notification of the information of the base station 200 from the notification unit 415. When receiving the notification of the information of the base station 200, the communication control unit 311 may store the information of the base station 200 in the transmission buffer 412 and cause the communication terminal 400 to transmit the information to the base station 200. Thus, the information of the base station 200 is also notified to the server device 100.

Note that the communication terminal 400 may be configured to notify the server device 100 of the information of the base station 200 without going through the local controller 300. For example, the notification unit 415 may store the information of the base station 200 in the transmission buffer 412 and cause the communication terminal 400 to transmit the information to the base station 200.

If the information of the base station 200 includes identification information of the base station 200, the communication control unit 311 may control the communication terminal 400 to be connected to the base station 200 that is predetermined (default base station). For example, the communication control unit 311 designates the default base station and requests the transceiver unit 411 to limit the connection destination so as to be preferentially connected to the default base station. The transceiver unit 411 controls a transmission/reception direction of a radio signal by beam forming or the like so as to be easily connected to the default base station.

The communication control unit 311 may request the transceiver unit 411 to connect to the base station 200 (including reconnection) after moving the body 30 using the motion control unit 312 so that the communication terminal 400 approaches the default base station. The communication control unit 311 may execute both moving the body 30 using the motion control unit 312 so that the communication terminal 400 approaches the default base station, and controlling the transceiver unit 411 to be preferentially connected to the default base station.

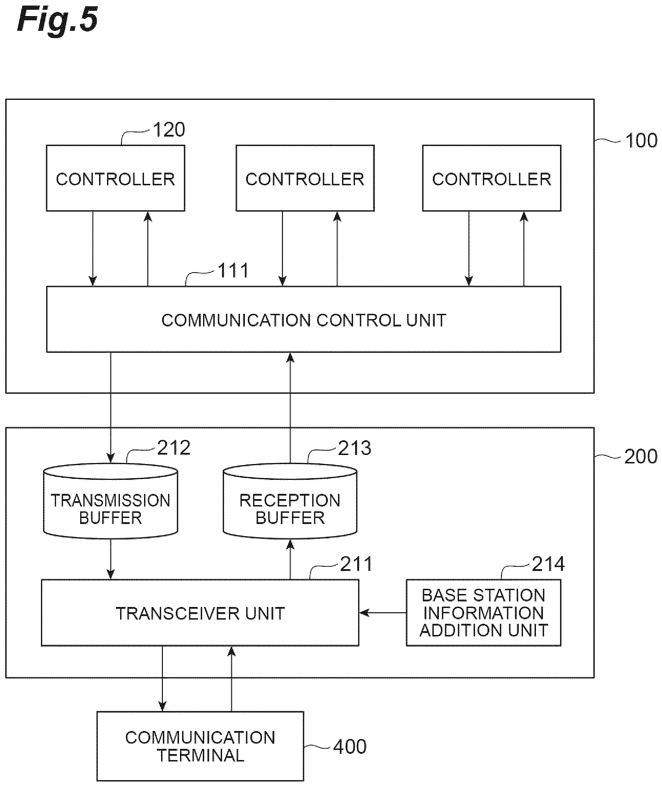

FIG. 5 is a block diagram illustrating a functional configuration of the base station 200 and the server device 100. As illustrated in FIG. 5, the base station 200 includes a transceiver unit 211, a transmission buffer 212, a reception buffer 213, and a base station information addition unit 214 as functional blocks. The transceiver unit 211 performs mobile wireless communication with the communication terminal 400. The transmission buffer 212 temporarily stores information that the transceiver unit 211 transmits to the communication terminal 400 through mobile wireless communication. The reception buffer 213 temporarily stores information received by the transceiver unit 211 from the communication terminal 400 through mobile wireless communication. The base station information addition unit 214 adds the above-described information of the base station 200 to the information that the transceiver unit 211 transmits to the communication terminal 400.

The server device 100 includes a communication control unit 111 and a plurality of controllers 120 as functional blocks. The communication control unit 111 performs inter-device communication with the local controller 300. For example, the communication control unit 111 stores, in the transmission buffer 212, information to be transmitted from the base station 200 to the communication terminal 400, and reads, from the reception buffer 213, information that the base station 200 receives from the communication terminal 400.

As described above, when the information of the base station 200 is transmitted from the communication terminal 400 to the base station 200, the communication control unit 111 receives the information of the base station 200. As a result, the communication control unit 111 is notified of the information of the base station 200. Instead of the communication control unit 311, the communication control unit 111 may control the communication terminal 400 to be connected to the default base station. For example, the communication control unit 111 stores a request for restriction of a connection destination by beam forming or the like in the transmission buffer 212.

Instead of the communication control unit 311, the communication control unit 111 may request the transceiver unit 411 to connect to the base station 200 (including reconnection) after moving the body 30 using the motion control unit 312 so that the communication terminal 400 approaches the default base station. For example, the communication control unit 111 stores, in the transmission buffer 212, a command to move the body 30 using the motion control unit 312 so that the communication terminal 400 approaches the default base station, and stores, in the transmission buffer 212, a request to connect to the base station 200 for the transceiver unit 411 after reading a completion notification of the movement of the body 30 from the reception buffer 213.

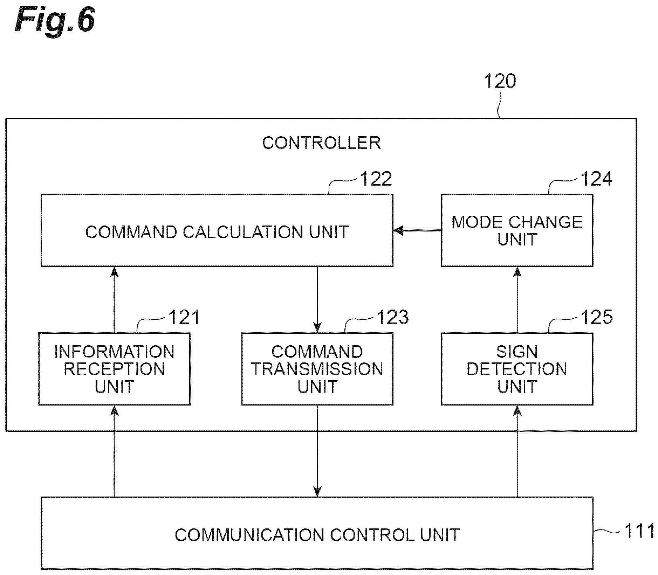

Each of the plurality of controllers 120 controls each of the plurality of machines 20 through inter-device communication performed by the communication control unit 111. For example, as illustrated in FIG. 6, each of the plurality of controllers 120 includes an information reception unit 121, a command calculation unit 122, a command transmission unit 123, a mode change unit 124, and a sign detection unit 125 as functional blocks.

The information reception unit 121 receives feedback information indicating a state of a corresponding machine 20 through inter-device communication. Examples of the feedback information include information indicating the current position and posture of the body 30. Examples of the current position and posture of the body 30 include the current position and posture of the automated guided vehicle 31 in the body 30A and the current position and posture of the robot 40 in the automated guided vehicle 31. The information indicating the current position and posture of the robot 40 may be the current angles of the joints 61, 62, 63, 64, 65, 66. The feedback information may be status information indicating whether the operation based on the command from the server device 100 is completed.

The command calculation unit 122 calculates a motion command based on the feedback information. The motion command is a command to cause the local controller 300 to cause the body 30 to perform a motion. Examples of the motion command include a speed command or a force (torque) command for causing the current position and posture of the body 30 to follow the target position and posture. The motion command may be a start command of a predetermined series of operations.

The command transmission unit 123 transmits the motion command to the local controller 300 of the corresponding machine 20 through inter-device communication.

The mode change unit 124 changes the control mode of the machine 20 by the controller 120 based on the information of the base station 200. For example, the mode change unit 124 changes the control mode of the machine 20 by the controller 120 from one of a plurality of predetermined modes to another.

The mode change unit 124 may change the control mode to reduce the influence of which controller 120 the communication terminal 400 is connected to. For example, the plurality of control modes may include a server control mode and an autonomous control mode. The server control mode is a mode in which the controller 120 controls the motion of the body 30 through inter-device communication. The autonomous control mode is a mode in which the local controller 300 autonomously controls the motion of the body 30. In this case, for example, the controller 120 transmits a motion start command to the local controller 300 and receives a motion completion notification from the local controller 300. In the autonomous control mode, the frequency of inter-device communication is lower than in the server control mode. Accordingly, in the autonomous control mode, the influence of which the controller 120 the communication terminal 400 is connected to is smaller than that in the server control mode.

Examples of the server control mode include a mode in which the motion of the body 30 is feedback-controlled by the server device 100. In this control mode, the controller 120 repeatedly executes reception of the feedback information by the information reception unit 121, generation of the motion command by the command calculation unit 122, and transmission of the motion command by the command transmission unit 123 at a predetermined control cycle.

For example, the information reception unit 121 receives feedback information indicating the current position and posture of the body 30. The command calculation unit 122 calculates a target position and posture for each control cycle based on a predetermined operation program, and calculates a motion command so that the current position and posture of the body 30 match the target position and posture. Making the current position and posture of the body 30 follow the target position and posture means changing the current position and posture in accordance with the change of the target position and posture so that the deviation between the target position and posture and the current position and posture remains within a predetermined range. For example, the command calculation unit 122 calculates the motion command by performing a proportional operation, a proportional-integral operation, a proportional-integral-differential operation, or the like on the deviation between the target position and posture and the current position and posture.

When such cyclic control is performed through inter-device communication, there is a possibility that the reception timing of the feedback information and the reception timing of the motion command vary due to a communication delay. In order to suppress the variation, the command transmission unit 123 may add first cycle information designating a control cycle in which the motion command is to be read to the motion command and transmit the motion command to the local controller 300. In this case, the communication control unit 311 stores the received motion command until the control cycle designated by the first cycle information, and the motion control unit 312 reads the motion command in the control cycle and controls the body 30 based on the read motion command.

Similarly, the communication control unit 311 in the local controller 300 may add second cycle information designating the control cycle in which the feedback information is to be read to the feedback information and transmit the feedback information to the server device 100. In this case, the communication control unit 111 stores the feedback information until the control cycle designated by the second cycle information, the information reception unit 121 reads the feedback information in the control cycle, and the command calculation unit 122 generates the motion command based on the read feedback information. Accordingly, the influence of the variation in the reception timing of the feedback information and the motion command on the motion of the body 30 is suppressed.

In order to perform such a cyclic server control mode with high reliability, a predetermined condition may be required for the capability of the base station 200. In such a case, the base station 200 satisfying a predetermined condition is set as the above-described default base station. The mode change unit 124 sets the control mode of the machine 20 to the server control mode if it determines that the base station 200 (the base station 200 to which the communication terminal 400 is connected) is the default base station based on the information of the base station 200, and sets the control mode of the machine 20 to the autonomous control mode if it determines that the base station 200 is not the default base station.

For example, if it is determined that the state is switched from a state in which the base station 200 is the default base station to a state in which the base station 200 is not the default base station (handover from the default base station to another base station has occurred), the mode change unit 124 changes the server control mode to the autonomous control mode. In addition, the mode change unit 124 changes the autonomous control mode to the server control mode if it is determined that the state is switched from a state in which the base station 200 is not the default base station to a state in which the base station 200 is the default base station (handover from another base station to the default base station has occurred).

The plurality of control modes may include a stop mode for keeping the body 30 in a stopped state. The mode change unit 124 may set the control mode of the machine 20 to the server control mode if it is determined that the base station 200 is the default base station based on the information of the base station 200, and may set the control mode of the machine 20 to the stop mode if it is determined that the base station 200 is not the default base station.

For example, the mode change unit 124 changes the control mode of the machine 20 from the server control mode to the stop mode if it is determined that the state is changed from a state in which the base station 200 is the default base station to a state in which the base station 200 is not the default base station (handover from the default base station to another base station occurs). In addition, the mode change unit 124 changes the control mode of the machine 20 from the stop mode to the server control mode if it is determined that the state is changed from a state in which the base station 200 is not the default base station to a state in which the base station 200 is the default base station (handover from another base station to the default base station occurs).

The mode change unit 124 may change the control mode so that the communication terminal 400 is more easily connected to the default base station. The plurality of control modes may include a first control mode in which the movement range of the body 30 reaches a position farther than a predetermined reference distance from the default base station, and a second control mode in which the movement range of the body 30 falls within the reference distance from the default base station. The second control mode may be a mode in which the body 30 is operated at a fixed position. For example, the second control mode may be a mode in which the robot 40 is operated with the automated guided vehicle 31 located at a fixed position.

In the second control mode, the body 30 operates at a position closer to the default base station than in the first control mode. Accordingly, in the second control mode, the communication terminal 400 is more easily connected to the default base station as compared with the first control mode. For example, if it is determined that the base station 200 is not the default base station based on the information of the base station 200 while the mode change unit 124 is controlling the machine 20 in the first control mode, the mode change unit 124 changes the control mode of the machine 20 from the first control mode to the second control mode.

The sign detection unit 125 detects the sign of handover of the base station 200 based on the information of the base station 200. For example, the sign detection unit 125 detects the sign of handover based on information of radio waves received by the communication terminal 400 from the base station 200. For example, the sign detection unit 125 detects the sign of handover when the strength of radio waves received by the communication terminal 400 from the base station 200 falls below a predetermined reference strength.

The information on the base station 200 may further include information on whether the communication terminal 400 receives an instruction to connect to a base station 200 other than the base station 200 being connected (hereinafter referred to as "handover instruction"). In this case, the sign detection unit 125 may detect the sign of handover when the communication terminal 400 is receiving the handover instruction.

The sign detection unit 125 may detect the sign of handover based on both whether the communication terminal 400 receives the handover instruction and the information of the radio waves received by the communication terminal 400 from the base station 200. For example, the sign detection unit 125 may detect a sign of handover when the communication terminal 400 receives a handover instruction and the strength of radio waves received by the communication terminal 400 from the base station 200 falls below a reference strength.

The communication terminal 400 may be configured to detect the sign of handover, and may be configured to notify the host system 11 of a detection result of the sign of handover by including the detection result in the information of the base station 200. In this case, the sign detection unit 125 detects the sign of handover based on the detection result of the sign of handover by the communication terminal 400.

The mode change unit 124 may change the control mode based on the sign of handover if the sign detection unit 125 detects the sign of handover.

For example, the mode change unit 124 may change the control mode based on the sign of handover so as to reduce the influence of the handover. For example, the mode change unit 124 may change the server control mode to the autonomous control mode or the stop mode if the sign detection unit 125 detects a sign of handover during execution of the server control mode. After switching the server control mode to the autonomous control mode or the stop mode, the mode change unit 124 may change the autonomous control mode to the server control mode if the sign detection unit 125 does not detect the sign of handover due to the completion of the handover or the like.

The mode change unit 124 may change the control mode based on the sign of handover so as to reduce the sign of handover. The plurality of control modes may include a first control mode in which the movement range of the body 30 reaches a position farther than a predetermined reference distance from the connected base station, and a second control mode in which the movement range of the body 30 falls within the reference distance from the connected base station. The second control mode may be a mode in which the body 30 is operated at a fixed position.

In the second control mode, the body 30 operates at a position closer to the connected base station as compared with the first control mode. Accordingly, in the second control mode, the sign of handover is reduced compared to the first control mode. For example, the mode change unit 124 changes the control mode of the machine 20 from the first control mode to the second control mode if a sign of handover is detected by the sign detection unit 125 while the machine 20 is controlled in the first control mode.

The communication control unit 111 may control the communication terminal 400 to decrease the sign of handover if the sign of handover is detected by the sign detection unit 125. For example, the communication control unit 111 designates the base station 200 being connected so as to reduce the sign of handover, and stores a request for restriction of a connection destination in the transmission buffer 212. The transceiver unit 411 controls the transmission/reception direction of a radio signal by beam forming or the like so as to reduce the sign of handover.

In the above description, a configuration in which the mode change unit 124 and the sign detection unit 125 are provided in the server device 100 has been described, but they may be provided in the local controller 300.

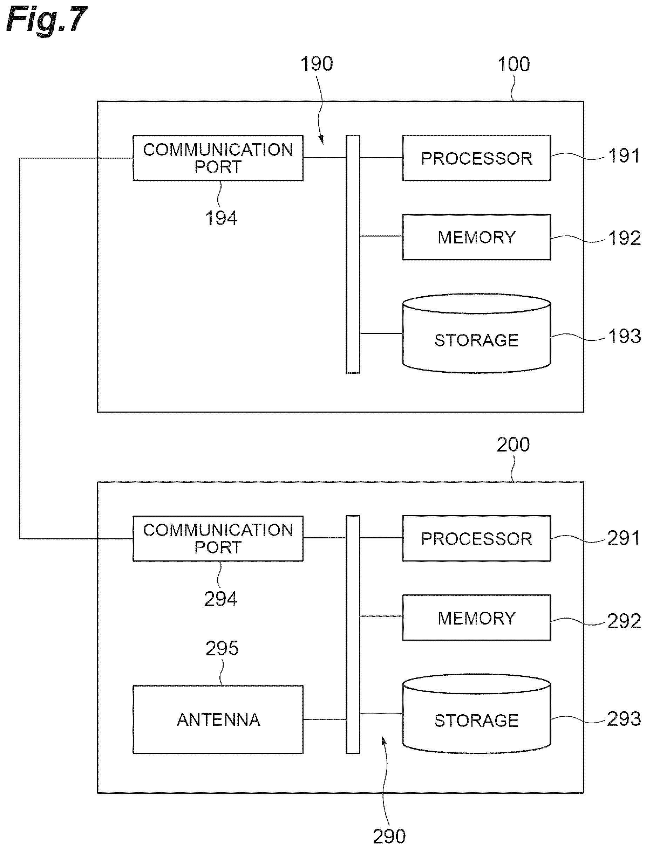

FIG. 7 is a block diagram illustrating a hardware configuration of the server device 100 and the base station 200. As illustrated in FIG. 7, the server device 100 includes circuitry 190. The circuitry 190 includes a processor 191, a memory 192, storage 193, and a user interface 195. The storage 193 is a nonvolatile storage medium. Specific examples of the storage 193 include a hard disk and a flash memory. The storage 193 may be a portable storage media such as an optical disc. The storage 193 stores a program for configuring the above-described functional blocks in the server device 100.

The memory 192 is a temporary memory such as a random-access memory, and temporarily stores the program that is loaded from the storage 193. The processor 191 is configured by one or more arithmetic elements, and causes the server device 100 to configure each of the functional blocks by executing the program loaded in the memory 192. A communication port 194 communicates with the base station 200 in response to a request from the processor 191.

The base station 200 includes circuitry 290. The circuitry 290 includes a processor 291, a memory 292, storage 293, a communication port 294, and an antenna 295. The storage 293 is a nonvolatile storage medium. Specific examples of the storage 293 include a hard disk and a flash memory. The storage 293 may be a portable storage media such as an optical disc. The storage 293 stores a program for configuring the above-described functional blocks in the base station 200.

The memory 292 is a temporary memory such as a random-access memory, and temporarily stores the program that is loaded from the storage 293. The processor 291 is configured by one or more arithmetic elements, and causes the base station 200 to configure each of the functional blocks by executing the program loaded in the memory 292. The communication port 294 communicates with the communication port 194 in response to a request from the processor 291. The antenna 295 transmits and receives a signal for mobile wireless communication in response to a request from the processor 291.

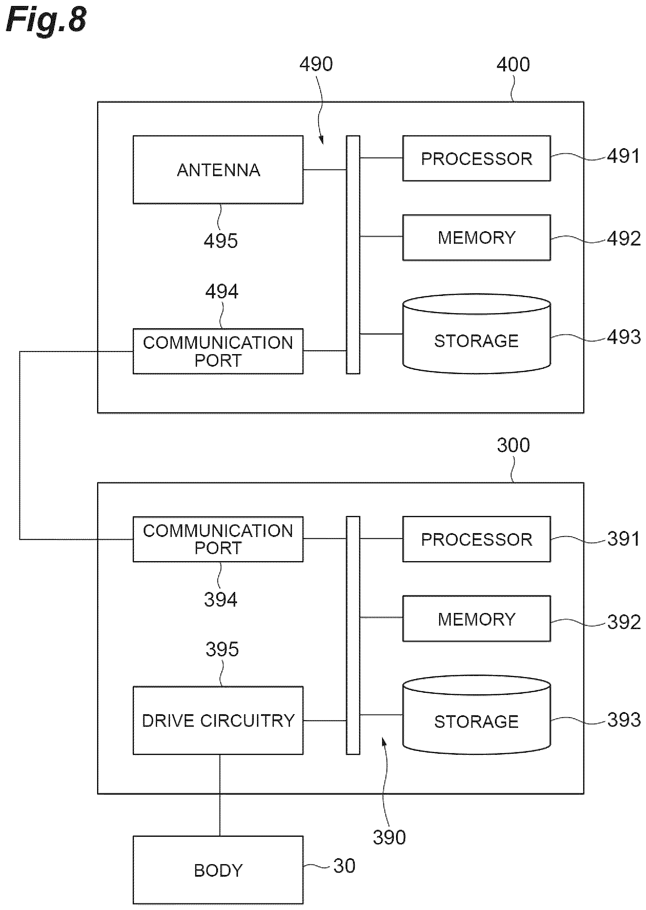

FIG. 8 is a block diagram illustrating a hardware configuration of the local controller 300 and the communication terminal 400. As illustrated in FIG. 8, the local controller 300 includes circuitry 390. The circuitry 390 includes a processor 391, a memory 392, storage 393, a communication port 394, and drive circuitry 395.

The storage 393 is a nonvolatile storage medium. Specific examples of the storage 393 include a hard disk and a flash memory. The storage 393 may be a portable storage media such as an optical disc. The storage 393 stores a program for configuring the above-described functional blocks in the local controller 300.

The memory 392 is a temporary memory such as a random-access memory, and temporarily stores the program that is loaded from the storage 393. The processor 391 is configured by one or more arithmetic elements, and causes the local controller 300 to configure each of the functional blocks by executing the program loaded in the memory 392. The communication port 394 communicates with the communication terminal 400 in response to a request from the processor 391. The drive circuitry 395 outputs driving power to the body 30 in response to a request from the processor 391, and acquires feedback information from the body 30.

The communication terminal 400 includes circuitry 490. The circuitry 490 includes a processor 491, a memory 492, storage 493, a communication port 494, and an antenna 495. The storage 493 is a nonvolatile storage medium. Specific examples of the storage 493 include a hard disk and a flash memory. The storage 493 may be a portable storage media such as an optical disc. The storage 493 stores a program for configuring the above-described functional blocks in the communication terminal 400.

The memory 492 is a temporary memory such as a random-access memory, and temporarily stores the program that is loaded from the storage 493. The processor 491 is configured by one or more arithmetic elements, and causes the communication terminal 400 to configure each of the functional blocks by executing the program loaded in the memory 492. The communication port 494 communicates with the communication port 394 in response to a request from the processor 491. The antenna 495 transmits and receives a signal for mobile wireless communication in response to a request from the processor 491.

### Control Procedure

Hereinafter, as an example of the control method, a control procedure including a communication procedure in the communication system 10 will be described. This control procedure includes a connection procedure between the communication terminal 400 and the base station 200, a control procedure of the communication terminal 400 by the host system 11, a change procedure of the control mode based on information of the base station 200, a change procedure of the control mode based on the sign of handover, a control procedure by server control mode, and a control procedure by autonomous control mode. Each procedure will be described below.

### Connection Procedure between Communication Terminal and Base Station

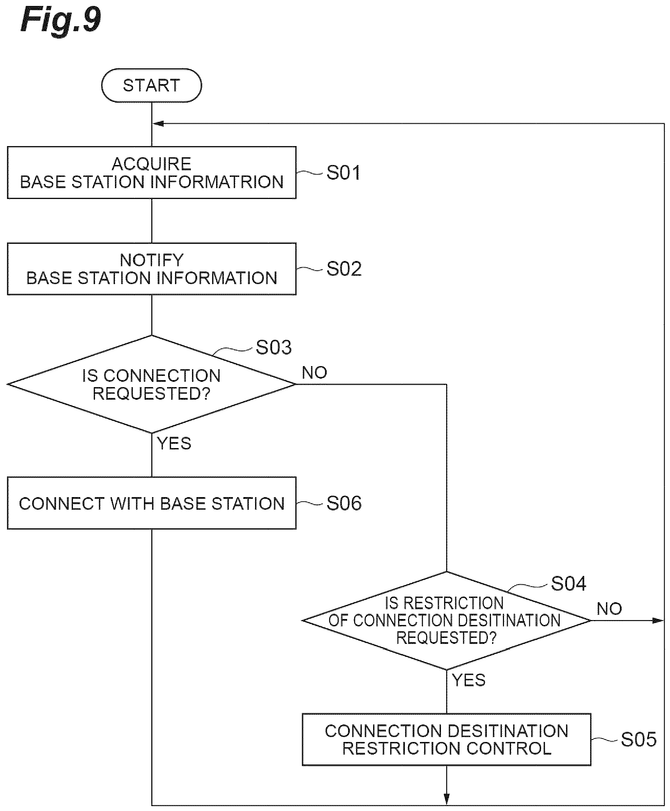

As illustrated in FIG. 9, the communication terminal 400 first executes steps S01, S02. In the step S01, the base station information acquisition unit 414 acquires information of the base station 200. In the step S02, the notification unit 415 notifies the local controller 300 of the information of the base station 200.

The communication terminal 400 then executes a step S03. In the step S03, the transceiver unit 411 checks whether a request for connection to the base station 200 is received from the local controller 300. If it is determined in the step S03 that the request for connection is not received, the communication terminal 400 executes a step S04. In the step S04, the transceiver unit 411 checks whether a request for restricting connection destination restriction (for example, the above-described request for beam forming or the like) is received from the local controller 300. If it is determined in the step S04 that the request for restricting the connection destination is not received, the communication terminal 400 returns the process to the step S01.

If it is determined in the step S04 that the request for restricting the connection destination is received, the communication terminal 400 executes a step S05. In the step S05, the transceiver unit 411 controls the transmission/reception direction of a wireless signal so that the transceiver unit 411 can be easily connected to the base station 200 designated in the request for restriction of a connection destination.

If it is determined in the step S03 that a connection request is received, the communication terminal 400 executes a step S06. In the step S06, the transceiver unit 411 establishes a connection with the base station 200.

### Control Procedure of Communication Terminal by Host System

The procedure described below can be executed by either the server device 100 or the local controller 300 in a state where a connection is established between the base station 200 and the communication terminal 400. It is assumed that the connection between the base station 200 and the communication terminal 400 is not established, and the following procedure is executed by the local controller 300.

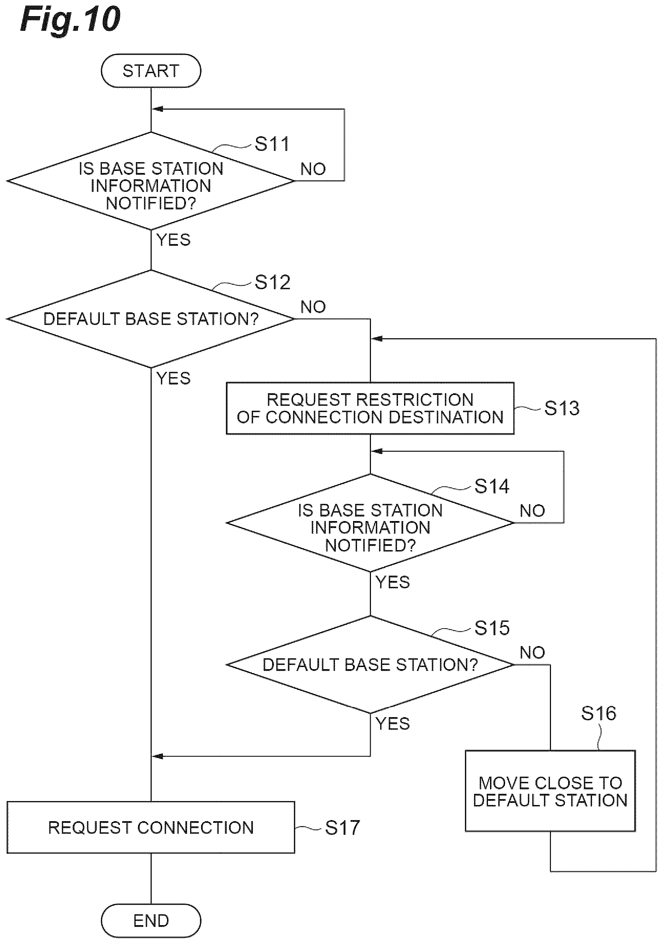

As illustrated in FIG. 10, the local controller 300 first executes steps S 11, S12. In the step S 11, the communication control unit 311 waits for the notification of information of the base station 200 from the notification unit 415. For example, the communication control unit 311 waits for notification from the notification unit 415 of information of the base station 200 to which the communication terminal 400 can connect. Hereinafter, the base station 200 to which the communication terminal 400 can be connected is referred to as a "candidate base station 200".

In the step S12, the communication control unit 311 checks whether the candidate base station 200 is the default base station based on the information of the candidate base station 200. If it is determined in the step S12 that the candidate base station 200 is not the default base station, the communication control unit 311 executes steps S13, S14, S15.

In the step S13, the communication control unit 311 designates the default base station and requests the transceiver unit 411 to restrict the connection destination. In response to this, the transceiver unit 411 controls the transmission/reception direction of the radio signal so as to facilitate connection to the default base station (the step S05 described above). In the step S 14, the communication control unit 311 waits for the information of the candidate base station 200 to be notified again from the notification unit 415. In the step S15, the communication control unit 311 checks whether the candidate base station 200 is the default base station based on the information of the candidate base station 200.

If it is determined in the step S15 that the candidate base station 200 is not the default base station, the local controller 300 executes a step S16. In the step S16, the communication control unit 311 moves the body 30 with the motion control unit 312 so that the communication terminal 400 approaches the default base station. The local controller 300 then returns the process to the step S13.

If it is determined in the step S12 that the candidate base station 200 is the default base station or if it is determined in the step S15 that the candidate base station 200 is the default base station, the local controller 300 executes a step S 17. In the step S17, the communication control unit 311 requests the transceiver unit 411 to connect with the base station 200. In response, the transceiver unit 411 establishes a connection with the base station 200 (the step S06 described above). Thus, the control procedure of the communication terminal 400 is completed.

### Change Procedure of Control Mode Based on Information of Base Station

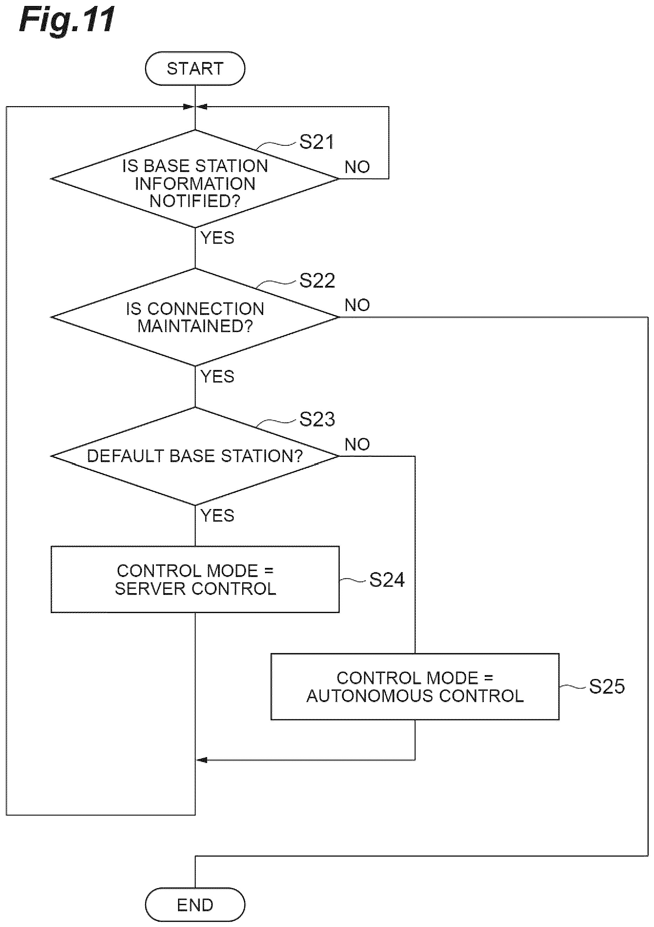

This procedure is executed after the connection between the base station 200 and the communication terminal 400 has been established. As illustrated in FIG. 11, the server device 100 first executes steps S21, S22. In the step S21, the communication control unit 111 waits for the notification of the information of the base station 200 from the notification unit 415. In the step S22, the communication control unit 111 checks whether the connection between the communication terminal 400 and the base station 200 is maintained based on the information of the base station 200 notified from the notification unit 415. If it is determined in the step S22 that the connection between the communication terminal 400 and the base station 200 is maintained, the server device 100 executes a step S23. In the step S23, based on the information of the base station 200 acquired by the communication control unit 111, the mode change unit 124 checks whether the base station 200 is the default base station.

If it is determined in the step S23 that the base station 200 is the default base station, the server device 100 executes a step S24. In the step S24, the mode change unit 124 sets the control mode to the server control mode described above. If it is determined in the step S23 that the base station 200 is not the default base station, the server device 100 executes a step S25. In the step S25, the mode change unit 124 sets the control mode to the autonomous control mode described above. After the steps S24, S25, the server device 100 returns the process to the step S21. Until it is determined that the connection between the communication terminal 400 and the base station 200 is not maintained in the step S22, the server device 100 repeatedly executes the above processing. If it is determined in the step S22 that the connection between the communication terminal 400 and the base station 200 is not maintained, the server device 100 ends the process. Thereafter, for example, the procedure illustrated in FIG. 10 is executed again.

### Change Procedure of Control Mode Based on Sign of Handover

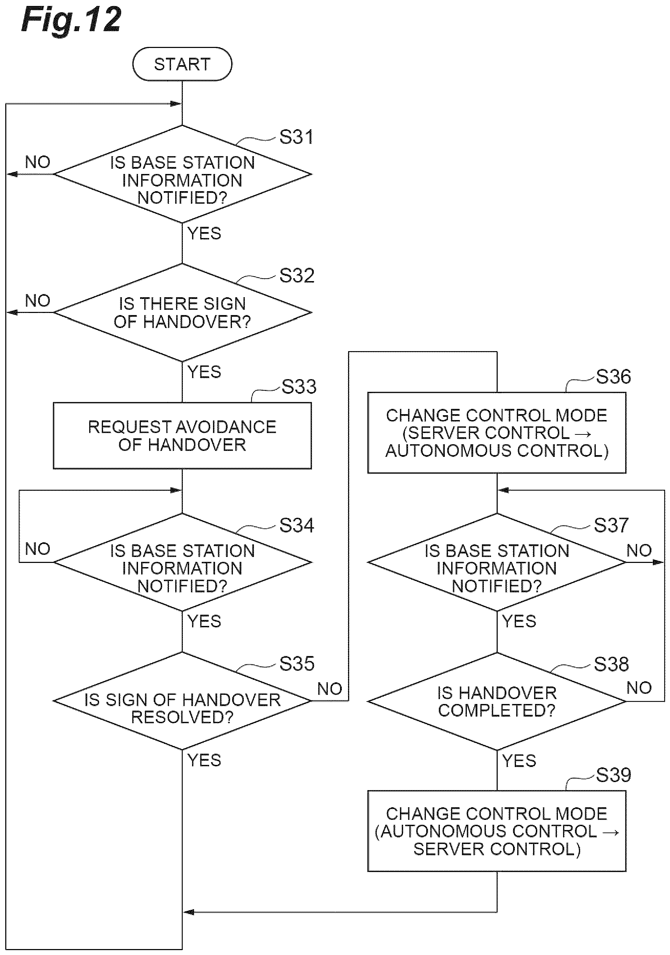

This procedure is executed after the connection between the base station 200 and the communication terminal 400 is established and the control of the machine 20 by the server device 100 is started. As illustrated in FIG. 12, the server device 100 first executes a step S31. In the step S31, the communication control unit 111 waits for the communication control unit 111 to be notified of the information of the base station 200 from the notification unit 415.

The server device 100 then executes a step S32. In the step S32, the sign detection unit 125 checks whether there is a sign of handover of the base station 200 based on the information of the base station 200. If it is determined in the step S32 that there is no sign of handover, the server device 100 returns the process to the step S31.

If it is determined in the step S32 that there is a sign of handover (if a sign of handover is detected), the server device 100 executes a step S33. In the step S33, the communication control unit 111 designates the base station 200 being connected so as to reduce the sign of handover, and stores a request for restriction of a connection destination in the transmission buffer 212. The transceiver unit 411 controls the transmission/reception direction of a radio signal by beam forming or the like so as to reduce the sign of handover.

The server device 100 then executes a step S34. In the step S34, the communication control unit 111 waits for the communication control unit 111 to be notified of the information of the base station 200 from the notification unit 415. In a step S35, the sign detection unit 125 checks whether the sign of handover of the base station 200 is resolved based on the information of the base station 200.

If it is determined in the step S35 that the sign of handover of the base station 200 is not resolved, the server device 100 executes steps S36, S37, S38. In the step S36, the mode change unit 124 changes the above-described server control mode to the above-described autonomous control mode. In the step S37, the communication control unit 111 waits for the communication control unit 111 to be notified of the information of the base station 200 from the notification unit 415. In the step S38, the sign detection unit 125 checks whether the sign of handover in the base station 200 is resolved by the completion of the handover or the like based on the information of the base station 200.

If it is determined in the step S38 that the sign of handover is not resolved, the server device 100 returns the process to the step S37. If it is determined in the step S38 that the sign of handover is resolved, the server device 100 executes a step S39. In the step S39, the mode change unit 124 changes the autonomous control mode to the server control mode.

The server device 100 then returns the process to the step S31. If it is determined in the step S35 that the sign of handover of the base station 200 is resolved, the server device 100 returns the process to the step S31 without executing the steps S36, S37, S38, S39. The server device 100 repeats the above procedure.

### Control Procedure in Server Control Mode

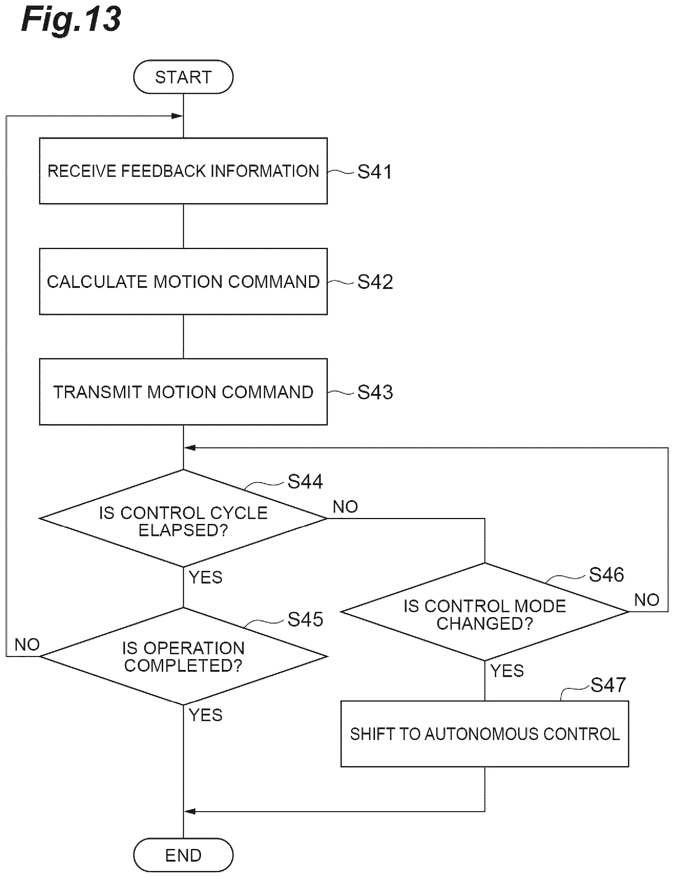

This procedure is a control procedure executed by the server device 100 in the server control mode described above. As illustrated in FIG. 13, the server device 100 executes steps S41, S42, S43, S44. In the step S41, the information reception unit 121 acquires feedback information indicating the current position and posture of the body 30. In the step S42, the command calculation unit 122 calculates a target position and posture for each control cycle based on a predetermined operation program, and calculates a motion command so that the current position and posture of the body 30 follow the target position and posture. In the step S43, the command transmission unit 123 transmits the motion command to the local controller 300. In the step S44, the command calculation unit 122 checks whether the control cycle has elapsed from immediately before the start of the step S41.

If it is determined in the step S44 that the control cycle has not elapsed, the server device 100 executes a step S46. In the step S46, the command calculation unit 122 checks whether the control mode is changed from the server control mode to the autonomous control mode. If it is determined in the step S46 that the control mode is not changed, the server device 100 returns the process to the step S44. Thereafter, the server device 100 waits for the control cycle to elapse or the control mode to be changed.

If it is determined in the step S44 that the control cycle has elapsed, the server device 100 executes a step S45. In the step S45, the command calculation unit 122 checks whether all operations based on the operation program are completed. If it is determined in the step S45 that not all operations are completed, the server device 100 returns the process to the step S41. If it is determined in the step S45 that all the operations are completed, the server device 100 completes the control by the server control mode.

If it is determined in the step S46 that the control mode is changed, the server device 100 executes a step S47. In the step S47, each of the information reception unit 121, the command calculation unit 122, and the command transmission unit 123 starts processing for the autonomous control mode. Thus, the control by the server control mode is completed.

### Control Procedure in Autonomous Control Mode

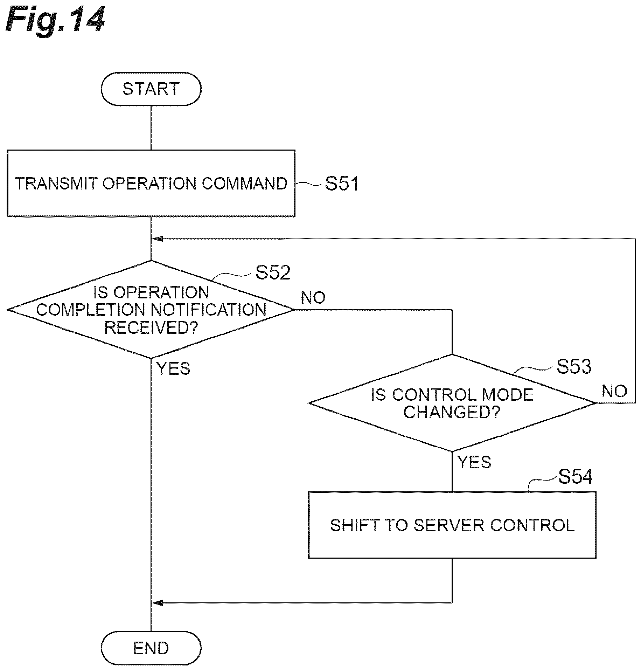

This procedure is a control procedure executed by the server device 100 in the above-described autonomous control mode. As illustrated in FIG. 14, the server device 100 executes steps S51, S52. In the step S51, the command transmission unit 123 transmits an operation command based on autonomous control to the local controller 300. In the step S52, the information reception unit 121 checks whether a completion notification of all operations in the autonomous control is received from the local controller 300.

If it is determined in the step S52 that the completion notifications of all the operations is not received, the server device 100 executes a step S53. In the step S53, the command calculation unit 122 checks whether the control mode is changed from the autonomous control mode to the server control mode. If it is determined in the step S53 that the control mode is not changed, the server device 100 returns the process to the step S52. Thereafter, the server device 100 waits for completion notifications of all operations to be received or the control mode to be changed.

If it is determined in the step S52 that the completion notifications of all the operations is received, the server device 100 completes the control in the autonomous control mode. If it is determined in the step S53 that the control mode is changed, the server device 100 executes a step S54. In the step S54, each of the information reception unit 121, the command calculation unit 122, and the command transmission unit 123 starts processing for the server control mode. Thus, the control in the autonomous control mode is completed.

### Summary

The embodiments described above include the following configurations.
(1) A communication system 10, including: a host system 11 including a client device 20, and a server device 100 configured to perform inter-device communication with the client device 20; and a communication terminal 400 connected to the client device 20 and configured to perform mobile wireless communication for the inter-device communication with a base station 200 connected to the server device 100, wherein the communication terminal 400 is configured to notify the host system 11 of information of the base station 200.
   There may be a case where the base station 200 serving as a communication partner of the communication terminal 400 has an influence on reliability of the inter-device communication in the host system 11. According to the communication system 10, the information of the base station 200 serving as the communication partner is notified to the host system 11 by the communication terminal 400. Therefore, in the host system 11, it is possible to cope with the above-described influence based on the information of the base station 200. Accordingly, it is effective to improve the reliability of inter-device communication by mobile wireless communication.
(2) The communication system 10 according to (1), wherein the host system 11 is configured to control the client device 20 while changing a control mode based on the information of the base station 200.
   The control mode can be flexibly changed based on the information of the base station 200 and reliability of control via mobile wireless communication can be improved.
(3) The communication system 10 according to (2), wherein the host system 11 is configured to change, based on the information of the base station 200, the control mode from a mode in which the server device 100 controls a motion of the client device 20 through the inter-device communication to a mode in which the client device 20 autonomously controls the motion.
   Both the expandability and the reliability of the motion control can be achieved by, for example, executing a control requiring advanced calculations by a combination of the server device 100 and the client device 20 in a case where the reliability of the control via the mobile wireless communication can be expected based on the information of the base station 200 and by executing a control executable by calculations by the client device 20 in a case where the reliability of the control via the mobile wireless communication cannot be expected.
(4) The communication system 10 according to (2) or (3), wherein the server device 100 includes: an information reception unit 121 configured to receive feedback information indicating a state of the client device 20 through the inter-device communication; a command calculation unit 122 configured to calculate a motion command based on the feedback information; and a command transmission unit 123 that transmits the motion command to the client device 20 through inter-device communication.
   By selecting the control mode based on the information of the base station 200, the feedback control through the mobile wireless communication can be executed with a high reliability.
(5) The communication system 10 according to any one of (2) to (5), wherein the host system 11 is configured to detect a sign of handover of the base station 200 based on the information of the base station 200, and change the control mode based on the sign of handover.
   Prior to handover, measures such as avoiding handover or changing the control mode so as not to be affected by handover can be easily taken in the host system 11.
(6) The communication system 10 according to (5), wherein the host system 11 is configured to change, when detecting the sign of handover while controlling the client device 20 in a first control mode, the first control mode to a second control mode in which the client device 20 is operated at a position closer to the base station 200 to which the client device 20 is connected compared to the first control mode.
   The control mode can be flexibly changed based on the information of the base station 200 and reliability of control via mobile wireless communication can be improved.
(7) The communication system 10 according to (5), wherein, the host system 11 is configured to control the communication terminal 400 so as to decrease the sign of handover when detecting the sign of handover. By using the handover information notified from the communication terminal 400 to avoid the handover, a decrease in reliability of the inter-device communication due to the handover can be prevented.
(8) The communication system 10 according to any one of (1) to (7), wherein the communication terminal 400 is configured to notify the host system 11 of identification information of the base station 200 as the information on the base station 200.
   The host system 11 can more easily cope with the above-described influence (influence of the base station 200 on the reliability of the inter-device communication).
(9) The communication system 10 according to (8), wherein the host system 11 is configured to control the communication terminal 400 to be connected to a default base station 200 based on the identification information.
   By using the identification information of the base station 200 notified from the communication terminal 400 in order to control the communication terminal 400 so as to be connected to the default base station 200, the reliability of inter-device communication can be further improved. In addition, by limiting the number of the communication terminals 400 connected to each base station 200, the communication load per each base station 200 can be adjusted.
(10) The communication system 10 according to (9), wherein the host system 11 is configured to request the communication terminal 400 to be connected to the base station 200 after moving the communication terminal 400 closer to the default base station 200 using the client device 20.
   The communication terminal 400 can be more reliably connected to the default base station 200.
(11) A communication terminal 400 that is connected to a client device 20 of a host system 11 including the client device 20 and a server device 100 that are configured to perform inter-device communication with each other, the communication terminal 400 being configured to perform mobile wireless communication for the inter-device communication with a base station 200 connected to the server device 100, the communication terminal 400 including: a base station information acquisition unit 414 configured to acquire information of the base station 200; and a notification unit 415 configured to notify a system of information of the base station 200.

### Reference Signs List

100: server device; 20: client device; 10: communication system; 200: base station; 11: host system; 400: communication terminal; 414: base station information acquisition unit; 415: notification unit; 121: information reception unit; 122: command calculation unit; 123: command transmission unit.

## Claims

1. A communication system, comprising:
a host system comprising:
a client device; and
a server device configured to perform inter-device communication with the client device; and
a communication terminal connected to the client device and configured to perform mobile wireless communication for the inter-device communication with a base station connected to the server device,
wherein the communication terminal is configured to notify the host system of information of the base station.

2. The communication system according to claim 1, wherein the host system is configured to control the client device while changing a control mode based on the information of the base station.

3. The communication system according to claim 2, wherein the host system is configured to change, based on the information of the base station, the control mode from a mode in which the server device controls a motion of the client device through the inter-device communication to a mode in which the client device autonomously controls the motion.

4. The communication system according to claim 2, wherein the server device comprises:
an information reception unit configured to receive feedback information indicating a state of the client device through the inter-device communication;
a command calculation unit configured to calculate a motion command based on the feedback information; and
a command transmission unit configured to transmit the motion command to the client device through the inter-device communication.

5. The communication system according to any one of claims 2 to 4, wherein the host system is configured to detect a sign of handover of the base station based on the information of the base station, and change the control mode based on the sign of handover.

6. The communication system according to claim 5, wherein the host system is configured to change, when detecting the sign of handover while controlling the client device in a first control mode, the first control mode to a second control mode in which the client device is operated at a position closer to the base station to which the client device is connected compared to the first control mode.

7. The communication system according to claim 5, wherein the host system is configured to control the communication terminal so as to decrease the sign of handover when detecting the sign of handover.

8. The communication system according to any one of claims 1 to 4, wherein the communication terminal is configured to notify the host system of identification information of the base station as the information of the base station.

9. The communication system according to claim 8, wherein the host system is configured to control the communication terminal to be connected to a default base station based on the identification information.

10. The communication system according to claim 9, wherein the host system is configured to request the communication terminal to connect to the base station after moving the communication terminal closer to the default base station using the client device.

11. A communication terminal that is connected to a client device of a host system comprising the client device and a server device that are configured to perform inter-device communication with each other, the communication terminal being configured to perform mobile wireless communication for the inter-device communication with a base station connected to the server device, wherein the communication terminal comprises:
a base station information acquisition unit configured to acquire information of the base station; and
a notification unit configured to notify a system of the information of the base station.
